Europäisches Patentamt

European Patent Office

Office européen des brevets

(11) Publication number : **0 509 777 A2**

(19)

(12) # EUROPEAN PATENT APPLICATION

(21) Application number : 92303373.2

(22) Date of filing : 15.04.92

(51) Int. Cl.$^5$ : **G01S 5/00**, G08G 1/01

(30) Priority : 19.04.91 JP 88362/91

(43) Date of publication of application :
21.10.92 Bulletin 92/43

(84) Designated Contracting States :
DE FR GB

(71) Applicant : PIONEER ELECTRONIC
CORPORATION
No.41, Meguro 1-chome
Meguro-ku Tokyo (JP)

(72) Inventor : Tsuda, Youichirou, c/o Pioneer
Electronic Corp.
4-1, Meguro 1-chome, Meguro-ku
Tokyo (JP)
Inventor : Inazawa, Takeshi, c/o Pioneer
Electronic Corp.
4-1, Meguro 1-chome, Meguro-ku
Tokyo (JP)

(74) Representative : Brunner, Michael John
GILL JENNINGS & EVERY 53-64 Chancery
Lane
London WC2A 1HN (GB)

(54) Remote monitoring and controlling system for moving bodies.

(57)    Each of a plurality of moving bodies (3-
1,...3-n) detects its present location, e.g., by
using a position-determining signal transmitted
from a GPS satellite (6), and transmits
positional information to a center control ap-
paratus (1). Based on the positional information
from the respective moving bodies, the center
control apparatus generates necessary image
information and displays (11) positions of the
respective moving bodies such that they are
superimposed on a map (A) including the
operating area. The center control apparatus
transmits (5), to the respective moving bodies,
information necessary for their operation, e.g.,
traffic information. In each moving body, such
information is displayed on its display (28) or
reproduced in the form of a voice.

FIG. 1

The present invention relates to a remote monitoring and controlling of moving bodies such as humans, automobiles, aircraft and ships. More specifically, the invention relates to the system of the above type which is suitable for intensively controlling a plurality of moving bodies from one location.

Many companies presently conduct their business activities using automobiles (hereinafter referred to as "moving bodies") such as trucks, hired cars and taxicabs. If a company uses a large number of moving bodies, it may be required, in order to efficiently utilize the moving bodies, to precisely know the operating status of the respective moving bodies and to conduct the transportation management in accordance with the operating status.

Presently, in most cases, the operation status is known by regular-basis communication from drivers to headquarters (e.g., transportation center) using a telephone, radio communication device, etc., or by drivers' daily reports.

However, in order to efficiently use the moving bodies, it is preferable not only to know their operating status on a real-time basis but also to correctly send the respective moving bodies information which is necessary for their smooth movement, specifically in such fields as cash transportation, load transportation and police.

An object of the present invention is to provide a remote monitoring and controlling system of moving bodies, which is capable of sending proper information to a plurality of moving bodies in intensively monitoring their movement status on a real-time basis.

According to the invention, a remote monitoring and controlling system of a plurality of moving bodies comprises:

a moving body terminal, at each of the plurality of moving bodies, comprising:

means for detecting a position of an associated moving body;

means for transmitting positional information indicating the detected position;

means for receiving operation-related information which is necessary for an operation of the associated moving body; and

means for producing an image or a voice representing the received information; and

a center control apparatus comprising:

means for receiving the positional information;

means for displaying the positions of the plurality of moving bodies in an operating area thereof such that they are superimposed on a map including the operating area based on the received positional information; and

means for transmitting the operation-related information to at least part of the plurality of moving bodies.

In the drawings:-

Fig. 1 is a block diagram showing the whole construction of a remote monitoring and controlling system according to the present invention;

Fig. 2 is a block diagram showing the construction of a center control apparatus according to the invention;

Fig. 3 is a block diagram showing a moving body terminal according to the invention;

Fig. 4 is a block diagram showing an example of a display;

Fig. 5 is a flowchart showing a total display operation of moving body information;

Fig. 6 is a diagram showing an example of a picture appearing on the display in the total display operation;

Fig. 7 is a diagram showing an example of a picture in which a movement locus of a moving body is displayed;

Fig. 8 is a flowchart showing an operation of searching positions of moving bodies in a-specified area;

Fig. 9 is a diagram showing an example of a picture for defining the area of searching moving body positions;

Fig. 10 is a diagram showing an example of a picture in which results of the position search are displayed;

Fig. 11 is a flowchart showing a traffic information display operation; and

Fig. 12 is a diagram illustrative of an example of a picture appearing on the display in a data transmitting operation.

Preferred embodiments of the present invention are described hereinafter with reference to the accompanying drawings.

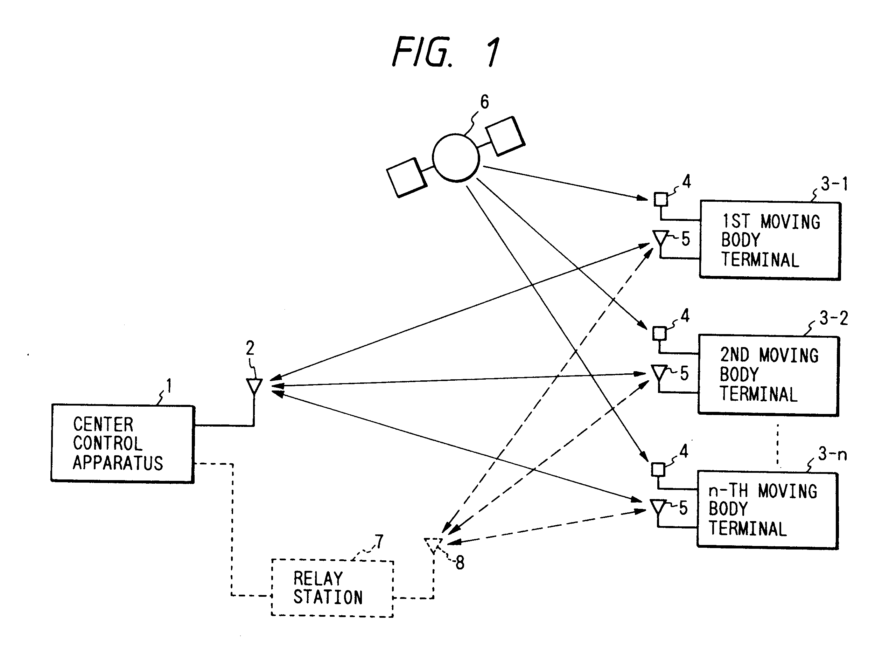

Fig. 1 is a block diagram of an entire system of remotely monitoring and controlling moving bodies. A center control apparatus 1 is installed at headquarters which are located at a place suitable for operating the system under consideration. On the other hand, a first moving body terminal 3-1, second moving body terminal 3-2, ...., n-th moving body terminal 3-n are installed on respective moving bodies which move according to their own operating schedules in a geographical area to which the system under consideration is applied. Each of the first to n-th moving body terminals 3-1, 3-1, ...., 3-n detects its own location, for instance, on the basis of a position-determining radio signal which is sent from an artificial satellite 6 and received by a GPS antenna 4, and transmits information on its present location to the center control apparatus 1 by radio communication via antennas 5, 2 or by wired communication via commercial lines (a relay station 7). The center control apparatus 1 displays an image containing a map of the operating area and movement information such as present locations of the respective moving bodies on the basis of the transmitted information on the present locations.

Each of the above units is described below in detail.

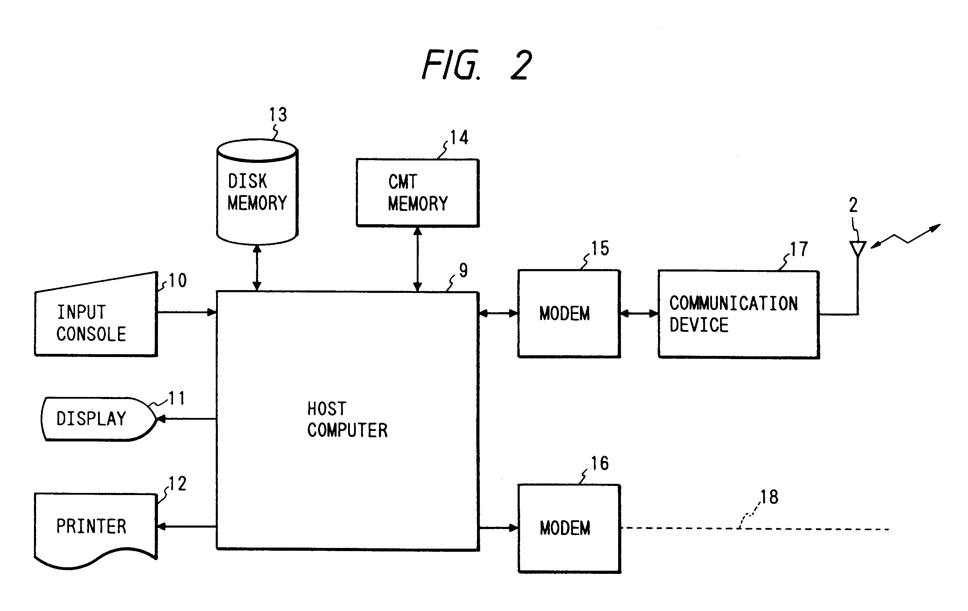

Fig. 2 shows the construction of the center control apparatus 1. A host computer 9 as a main part of the center control apparatus 1 controls not only the entire center control apparatus 1 but also the display operation according to the invention. Although not shown in Fig. 2, the host computer 9 can be an ordinary computer including a CPU, a ROM connected to the CPU via a signal bus, a RAM, an I/O port and other parts. The ROM stores control programs for the control of the entire center control apparatus 1, control programs for the display operation according to the invention, and other necessary programs. Programs for the display operation and data collection and processing are directly related to the invention, and control algorithm of such programs is described below.

Connected to the host computer 9, as I/O peripheral devices, are an input console 10 for entry of necessary data, a display 11 for the display operation, and a printer 12 for hard-copying displayed data. Also connected to the host computer 9 are a disk memory or CD-ROM 13 for storing collected data and for storing in advance map data etc., and a CMT (cassette magnetic tape) memory 14 for the system back-up etc. Further, a modem 15, communication device 17 and antenna 2 for exchanging data with the first to n-th moving bodies 3-1, 3-2, ...., 3-n are also connected to the host computer 9. Where communication with the moving bodies is performed via the relay station 7, commercial lines 18 and a modem 16 are employed between the relay station 7 and the host computer 9.

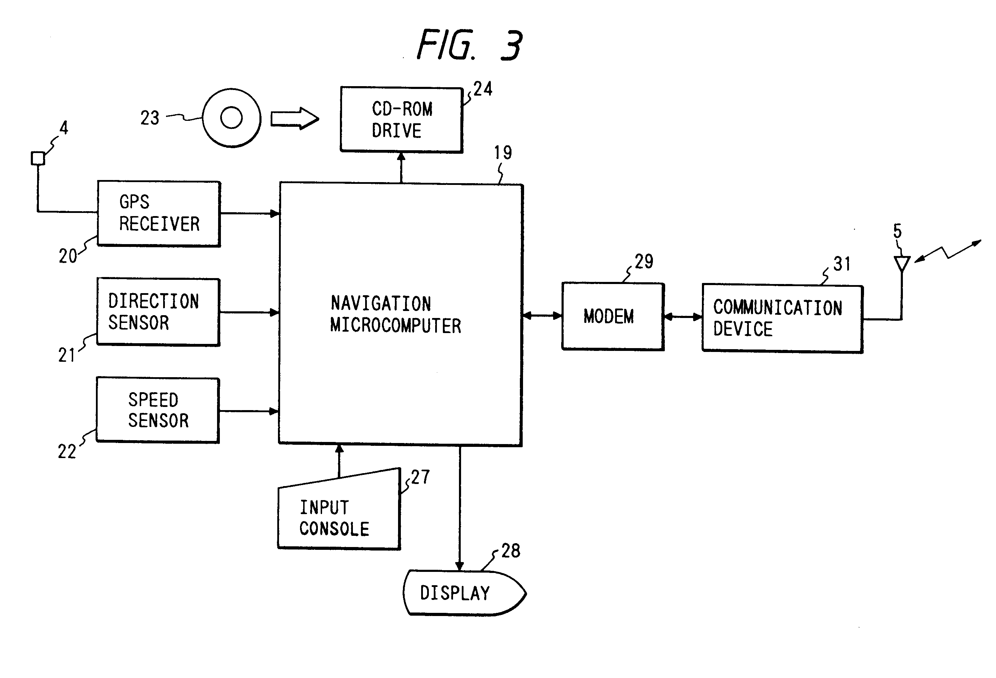

Fig. 3 shows the construction of the first moving body terminal 3-1. Since the other moving body terminals 3-2, ...., 3-n have the same construction, drawings and descriptions for those are omitted here. The first moving body terminal 3-1 basically acts as a navigation device and a communication device, and its main functions are performed by a navigation microcomputer 19, which can be an ordinary microcomputer. Although not shown in Fig. 3, the navigation microcomputer 19 includes a CPU, ROM, RAM, signal bus and I/O port. The navigation function and data communication function are performed in cooperation with peripheral devices (described later) while being controlled by control programs stored in the ROM.

Further, the first moving body terminal 3-1 has a GPS receiver 20 as a position detecting means. The GPS receiver 20, connected to the navigation microcomputer 19, receives a position-determining signal from the artificial satellite 6 by the GPS antenna 4, and provides, based on the received position-determining signal, the navigation microcomputer 19 with a signal indicating a movement distance and a movement direction of the first moving body. On the other hand, separately from the GPS-based position-determining device, the first moving body terminal 3-1 has an independent position-determining device, which consists of a direction sensor 21 such as a magnetic gyro and a speed sensor 22 for detecting a vehicle speed from, e.g., a rotational speed of a crank shaft of the moving body. The navigation microcomputer 19 performs data processing on the basis of a movement direction signal from the direction sensor 21 and a speed signal from the speed sensor 22, to detect a present position of the moving body. Although the first moving body 3-1 may have either one of the two position-determining devices, reliability of the position detecting information will be improved by selecting appropriate device in accordance with a variation of a GPS radio signal state and an environment of the moving body. More specifically, the satellite-based device has an advantage of not being affected by the environment conditions, but will not operate correctly, e.g., in a tunnel. Further, the employment of the two devices provides an advantage that position-determining data of one device can be corrected using that of the other device.

The moving body terminal 3-1 has, as an I/O means, an input console 27 and a display 28. Further, it has a CD-ROM drive 24 for a CD-ROM 23 which stores map data etc. necessary for the navigating operation. A modem 29, communication device 31 and antenna 5 serve to transmit position data of the moving body to the center control apparatus 1 and to receive a message therefrom. The modem 29 operates when communication is performed via the relay station 7.

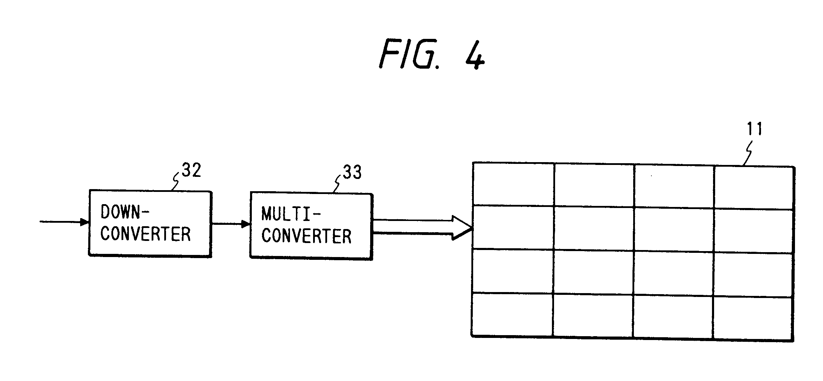

Fig. 4 shows an example of the display 11 that is installed in the center control apparatus 1. In large-scale transportation systems, it may be the case that the moving bodies are controlled by a plurality of operators. In such a case, it would be convenient that the positional information, map, etc. be displayed on a large screen to share those by the operators, instead of displaying those on individual displays for the respective operators. The large screen may be constructed by projection TV units arranged in matrix form. In this case, if an image is simply enlarged while the pixel density (516 scanning lines in the case of usual CRT displays) is kept unchanged, the enlarged image on the display 11 will become too thin. Therefore, it is required to increase the pixel density. To this end, the original image is divided into a plurality of sub-images corresponding to the respective projection TV units of the display 11, and necessary interpolation is performed. A-down-converter 32 converts a computer image signal having non-interlaced scanning and a higher horizontal frequency of 24-70 kHz into an interlaced scanning image signal of an ordinary TV system. A multi-converter 33 divides the resultant signal into image signals for the respective TV units.

Next, a display control operation by the center control apparatus 1 for the remote monitoring of the respective moving bodies is described.

First, referring to Fig. 1, the total operation of the remote monitoring and controlling system of moving bodies is briefly described. For instance receiving the position-determining radio signal from the artificial satellite 6, each of the first to n-th moving body terminals 3-1, 3-2, ...., 3-n detects its present location, and transmits the present position data through the path of the antenna 5, antenna 2 and center control apparatus 1 or through the path of the antenna 5, antenna 8, relay station 7 and center control apparatus 1. Collecting the position data from the first to n-th moving body terminals 3-1, 3-2, ...., 3-n, the center control apparatus 1 performs necessary data processing and displays positions of the respective moving bodies.

Total Display Operation of Moving Body Information

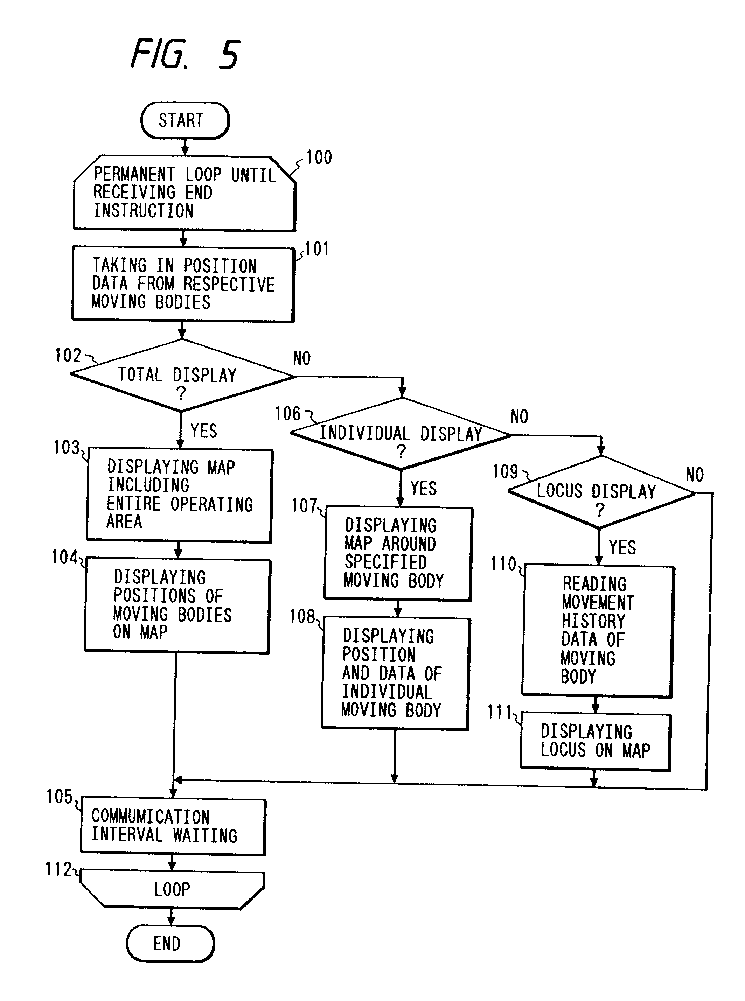

Fig. 5 is a flowchart of the total display operation of the moving body information. This algorithm is stored in the form of control programs in the ROM of the host computer 9 that is installed in the center control apparatus 1.

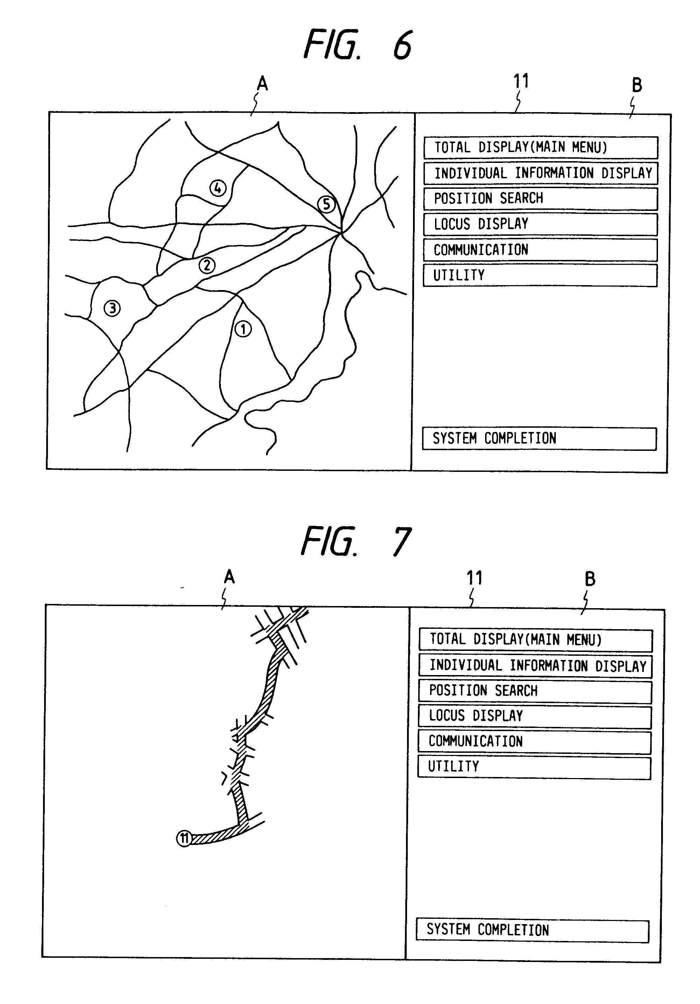

Referring to Fig. 5, in step 100, it is set that the display operation constitutes a loop which permanently continues to work until an end instruction is provided. Then, in step 101, the position data from the first to n-th moving body terminals 3-1, 3-2, ...., 3-n are taken in. In step 102, it is judged whether the display mode is "total display". In the "total display" mode, there is displayed the positions of the respective moving bodies over the entire operating area which is a jurisdictional area of the center control apparatus 1. If the judgment result of step 102 is "yes", the process proceeds to step 103, where a map of the entire operating area is displayed on the display 11. Data of this map is read out from the disk memory 13 shown in Fig. 2. Then, in step 104, the positions of the respective moving bodies are displayed on the display 11, that is, superimposed on the map. Fig. 6 shows an example of a picture to appear on the display 11.

As shown in Fig. 6, a displayed picture consists of a map display area A on the left side and a guidance display area B on the right side. Guidance for operators is displayed in the guidance display area B.

Returning to Fig. 5, while making control to display positions of the respective moving bodies on the map, the host computer 9 executes a waiting process (step 105) for the communication with the first to n-th moving body terminals 3-1, 3-2, ...., 3-n. Then, the process returns to step 101 to repeat the above.

Where the judgment result of step 102 is "no", the process goes to step 106 for judging whether the mode of displaying a position of each moving body is to be effected. If the judgment result of step 106 is "yes", the process goes to step 107 for displaying a map of an area around the location of a specified moving body on the basis of position data of that moving body. Then, in step 108, the position and related data of the specified moving body are superimposed on the map.

Where the judgment result of step 106 is "no", the process goes to step 109. In step 109, it is judged whether the "locus display" mode of displaying a movement history, i.e., a locus of a moving body under attention is to be effected. If the judgment is affirmative, the process goes to step 110, where movement history data representing present and past positions of the moving body under attention are read out from the RAM of the host computer 9, and continuous locus data is generated. Then, the process goes to step 111, where a movement locus of the moving body under attention is displayed together with a map. Fig. 7 shows an example of a picture appearing on the display 11, where the movement locus of the moving body under attention until the present time is indicated by hatching.

Search Display Operation of Moving Body Information

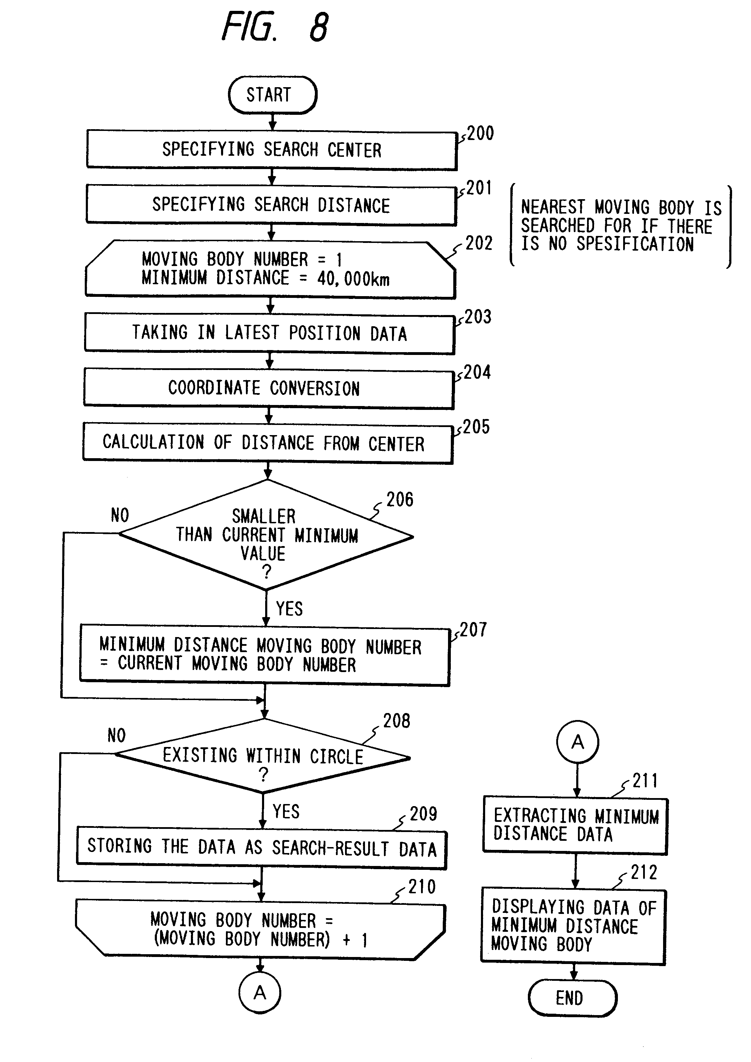

The above total display operation is for the case of displaying positions of the moving bodies in the entire operating area, i.e., the jurisdictional area of the center control apparatus 1. On the other hand, it is often desired that positions of the moving bodies in a particular region of the entire area be known. Fig. 8 is a flowchart of searching positions of the moving bodies in such a case.

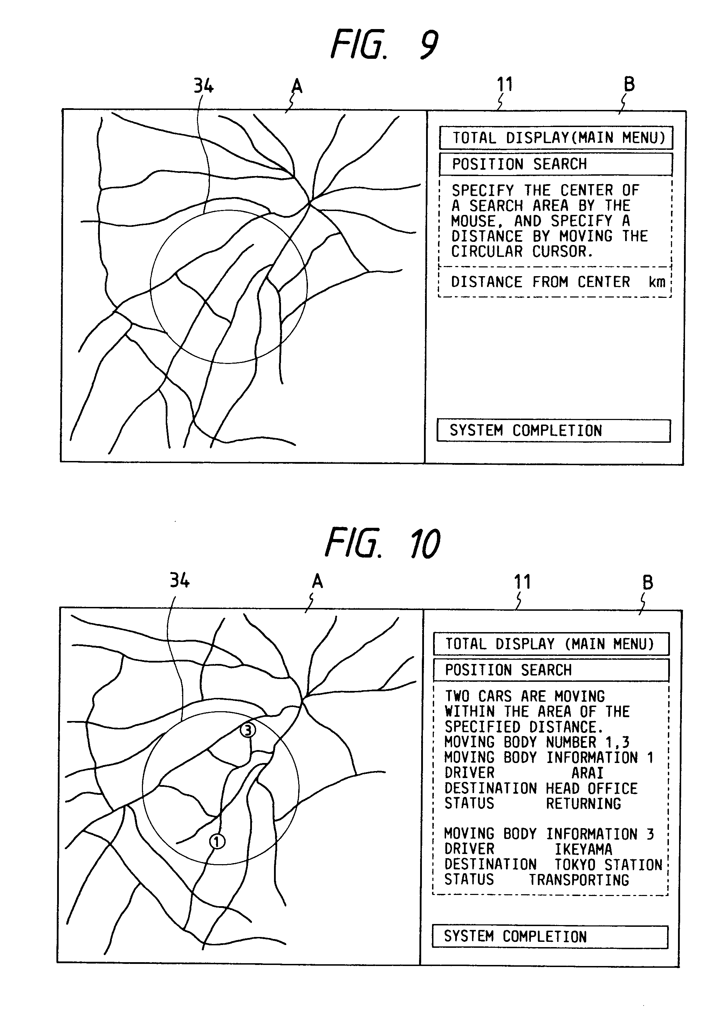

Prior to the position search, a picture as shown in Fig. 9 is first displayed on the display 11. Referring to Fig. 8, when an operator inputs search center data to the host computer 9 through the input console 10, the search center data thus input is taken in in step 200. Then, the operator inputs through the input console 10 search distance data to specify a search distance, i.e., to define the search area. As a modification, where no search distance is specified, a moving body nearest to the search center may be searched for. Next, in step 202, a search operation is started with a moving body number set to 1 and a minimum distance, e.g., at 40,000 km. The search is conducted by repeating processes of steps 202-209 while the moving body number is started from 1 and sequentially increased by one in step 210. Latest position data of a moving body of number 1 is taken in in step 203, subjected to coordinate conversion in step 204, and a distance between the moving body of number 1 and the search center is calculated in step 205. In step 206, it is judged whether the calculated distance value is smaller than the present minimum distance. At the initial stage where there is no data prior to that of the moving body of number 1, the judgment result of step 206 should be "yes", and the process goes to step 207. In step 207, the moving body of number 1 is set as a moving body located at a minimum distance position. Therefore, for the next moving body of number 2, the judgment of step 206 is made with the distance of the moving body of number 1 as the minimum distance. In step 208, it is judged whether the subject moving body of number 1 is located within a circle 34 (see Fig. 9) whose center and radius are the search center (step 200) and the search distance (step 201). If the judgment is affirmative, the moving body number 1 is stored in step 209 as search-result-data. If, on the other hand, the judgment is negative, the process jumps to step 210, where the moving body number is increased by one to deal with position data of the next moving body of number 2. In the same manner, the processes of steps 202-210 are repeated. When such processes have completed for all the moving bodies, the process goes to step 211. In step 211, the minimum distance data among the stored distance data of the respective moving bodies is extracted. Then, in step 212, the data of the minimum distance moving body (i.e., the moving body closest to the search center) is displayed.

Fig. 10 shows an example of a displayed picture in which a circle 34 of the search area is defined in the processes of steps 202-210 and the moving bodies of numbers 1 and 3 exist within that area. In the picture of Fig. 10, the circle 34 indicating the search area and the moving body positions are displayed together with a map in the map display area A, and data related to these moving bodies are displayed in the guidance display area B.

Traffic Information Display Operation

The above-described two kinds of operations are operations for intensively displaying, on the side of the center control apparatus 1, the movement status of the respective moving bodies based on the positional information transmitted from the first to n-th movement body terminals 3-1, 3-2, ..., 3-n. However, in order to ensure smooth movement of the respective moving bodies, it is preferable not only to know their status (i.e., one-way communication) but also that the center control apparatus 1 positively provide the respective moving bodies with information necessary for their operation. Examples of such information are an operation schedule of each moving body and traffic information indicating a route to a destination of each moving body and traffic statuses there.

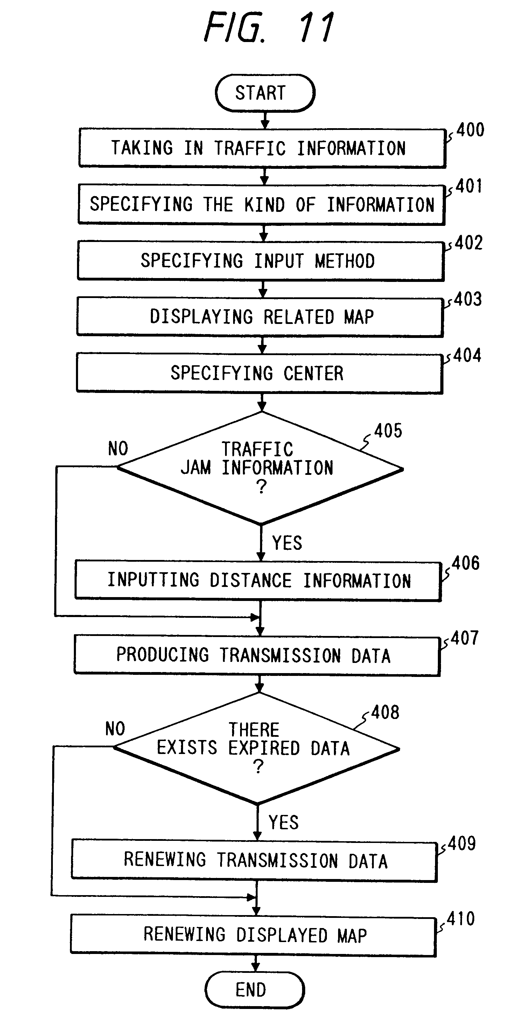

Fig. 11 is a flowchart showing a display operation which is performed on the side of the center control apparatus 1 to transmit traffic information to the respective moving bodies, more specifically, performed by the host computer 9 in accordance with control programs stored in its ROM.

Referring to Fig. 11, in step 400, the host computer 9 takes in current traffic information provided from its own network or a public organization. Then, in step 401, the kind of information among the traffic information thus taken in is specified, where the "kind" means a kind of traffic information statuses such as "in a traffic jam due to road construction" and "closed up due to an accident". In step 402, an input method is specified; e.g., input of individual information by key board manipulation and menu selection by mouse clicking. Upon selection of specific traffic information by the specified input method, in step 403 the host computer 9 instructs the display 11 to display a map of a related area. Then, in step 404, the center of a search area is specified. In step 405, it is judged whether there exists, for instance, a traffic'am within the area defined by the specified center and a predetermined radius, that is, there exists any traffic'am information within that area. If the judgment result is "no", the process jumps to step 407. If it is "yes", the process goes to step 406, where a distance of a jam position from the center is input. Then, the host computer 9 produces data to be transmitted to related moving bodies based on the distance information thus input, and send it to them via the antenna 2 or relay station 7. Since the transmitted data is displayed on the display 28 or reproduced in the form of a voice in each of the moving body terminals 3-1, 3-2, ...., 3-n, it is known on the moving body side whether there exists a traffic'am ahead. Further, since an actual distance to the jam position can be measured using the navigation microcomputer 19 and GPS receiver 20, resultant measurement data is also displayed automatically. Then, in steps 408 and 409, it is always confirmed that the traffic information is a latest one, and the information is modified if necessary. Further, if necessary, in step 410 the map being displayed on the display 11 of the center control apparatus 1 is renewed.

In the above manner, receiving necessary traffic information, the center control apparatus 1 transmits that information as a message to the respective moving bodies. Therefore, the system has advanced, from the one-way monitoring system of moving bodies, to the one which can positively improve the operational efficiency.

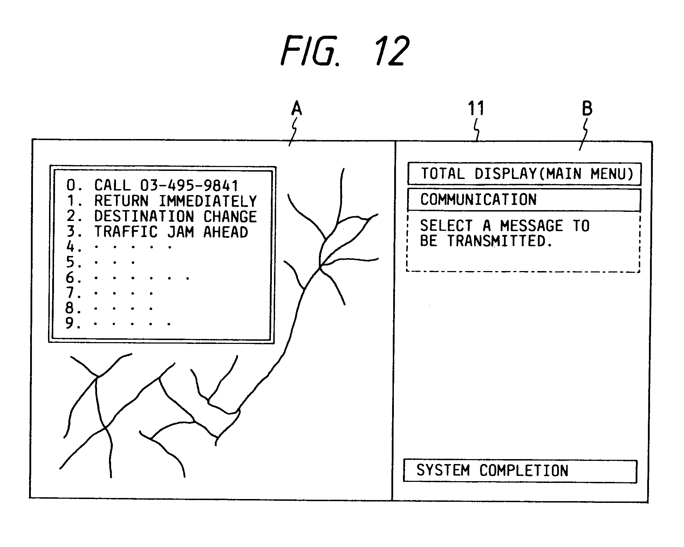

Fig. 12 shows an example of a picture appearing on the display 11 when the center control apparatus 1 transmits data to the respective moving bodies. A menu of messages of the transmission data is displayed in the map display area A of the display 11, and a procedure for manipulating the input console 10 is shown in the guidance display area B.

Although traffic information is employed to exemplify the transmission data in the above embodiment, the invention is not limited to such a case, but the transmission data may be any information which is necessary for the operation of the moving bodies. In the latter cases, the contents of step 405 in Fig. 11 should be changed accordingly.

As described in the foregoing, according to the invention, in addition to intensively monitoring the respective moving bodies, the center control apparatus 1 transmits data to the respective moving bodies, and each moving body terminal displays the transmitted information. As a result, the moving bodies can be controlled closely in a more detailed manner, and their smooth operation can be ensured.

## Claims

1. A remote monitoring and controlling system for a plurality of moving bodies, comprising:

   a moving body terminal (3-1,...3-n), at each of the plurality of moving bodies, comprising:

       means (4,20;21,22) for detecting a position of an associated moving body;

       means (5,29,31) for transmitting positional information indicating the detected position;

       means (27) for receiving operation-related information which is necessary for an operation of the associated moving body; and

       means (28) for producing an image or a voice representing the received information; and

   a center control apparatus (1) comprising:

       means (2,15,17;16,18) for receiving the positional information;

       means (11) for displaying the positions of the plurality of moving bodies in an operating area thereof such that they are superimposed on a map including the operating area based on the received positional information; and

       means (15,17,2;16,18,7,8) for transmitting the operation-related information to at least part of the plurality of moving bodies.

2. The system of claim 1, wherein the operation-related information includes information for instructing the part of the plurality of moving bodies on their operation thereafter.

3. The system of claim 1, wherein the operation-related information includes traffic information.

4. The system of claim 1, wherein the position detecting means comprises:

   an antenna (4) for receiving a position-determining signal transmitted from a GPS satellite (6);

   a GPS receiver (20) for producing a movement distance signal and a direction signal based on the received position-determining signal; and

   a data processing device (19) for producing the positional information of the associated moving body based on the movement distance signal and the direction signal.

5. The system of claim 1, wherein the position detecting means comprises:

   a speed detecting device (22), provided in the associated moving body, for detecting the speed of movement of the associated moving body to produce a speed signal;

   a movement direction detecting device (21), provided in the associated moving body, for detecting the direction of movement of the associated moving body to produce a direction signal; and

   a data processing device (9) for producing the positional information based on the speed signal and the direction signal.

6. The system of claim 1, wherein the center control apparatus (1) receives the positional information and transmits the operation-related information in the form of a radio signal.

7. The system of claim 1, wherein the center control apparatus (1) receives the positional information and transmits the operation-related information via a relay station (7) and commercial telephone lines (18).

# FIG. 1

# FIG. 2

# FIG. 3

CD-ROM DRIVE 24

23

4

GPS RECEIVER 20

DIRECTION SENSOR 21

SPEED SENSOR 22

NAVIGATION MICROCOMPUTER 19

INPUT CONSOLE 27

DISPLAY 28

MODEM 29

COMMUNICATION DEVICE 31

5

EP 0 509 777 A2

# FIG. 4

# FIG. 5

START

PERMANENT LOOP UNTIL RECEIVING END INSTRUCTION _100_

TAKING IN POSITION DATA FROM RESPECTIVE MOVING BODIES _101_

_102_ TOTAL DISPLAY ? —— NO

_103_ DISPLAYING MAP INCLUDING ENTIRE OPERATING AREA

_104_ DISPLAYING POSITIONS OF MOVING BODIES ON MAP

YES

_106_ INDIVIDUAL DISPLAY ? —— NO

YES

_107_ DISPLAYING MAP AROUND SPECIFIED MOVING BODY

_108_ DISPLAYING POSITION AND DATA OF INDIVIDUAL MOVING BODY

_109_ LOCUS DISPLAY ? —— NO

YES

_110_ READING MOVEMENT HISTORY DATA OF MOVING BODY

_111_ DISPLAYING LOCUS ON MAP

_105_ COMMUMICATION INTERVAL WAITING

_112_ LOOP

END

# FIG. 6

A 11 B

| TOTAL DISPLAY(MAIN MENU) |
| INDIVIDUAL INFORMATION DISPLAY |
| POSITION SEARCH |
| LOCUS DISPLAY |
| COMMUNICATION |
| UTILITY |

| SYSTEM COMPLETION |

# FIG. 7

A 11 B

| TOTAL DISPLAY(MAIN MENU) |
| INDIVIDUAL INFORMATION DISPLAY |
| POSITION SEARCH |
| LOCUS DISPLAY |
| COMMUNICATION |
| UTILITY |

| SYSTEM COMPLETION |

# FIG. 8

```
                    START

                200  SPECIFYING SEARCH CENTER

                201  SPECIFYING SEARCH DISTANCE        NEAREST MOVING BODY IS
                                                        SEARCHED FOR IF THERE
                202  MOVING BODY NUMBER = 1             IS NO SPESIFICATION
                     MINIMUM DISTANCE = 40,000km

                203  TAKING IN LATEST POSITION DATA

                204  COORDINATE CONVERSION

                205  CALCULATION OF DISTANCE FROM CENTER

          NO              SMALLER                206
        ◄─────────  THAN CURRENT MINIMUM
                            VALUE
                              ?

                             YES

                207  MINIMUM DISTANCE MOVING BODY NUMBER
                     = CURRENT MOVING BODY NUMBER

          NO                                     208
        ◄─────────  EXISTING WITHIN CIRCLE
                              ?

                             YES      209

                209  STORING THE DATA AS SEARCH-RESULT DATA

                210  MOVING BODY NUMBER =
                     (MOVING BODY NUMBER) + 1

                             A
```

```
                    A

                211  EXTRACTING MINIMUM
                     DISTANCE DATA

                212  DISPLAYING DATA OF
                     MINIMUM DISTANCE
                     MOVING BODY

                    END
```

## FIG. 9

34     A     11     B

TOTAL DISPLAY(MAIN MENU)

POSITION SEARCH

SPECIFY THE CENTER OF
A SEARCH AREA BY THE
MOUSE, AND SPECIFY A
DISTANCE BY MOVING THE
CIRCULAR CURSOR.

DISTANCE FROM CENTER   km

SYSTEM COMPLETION

## FIG. 10

34     A     11     B

TOTAL DISPLAY (MAIN MENU)

POSITION SEARCH

TWO CARS ARE MOVING
WITHIN THE AREA OF THE
SPECIFIED DISTANCE.
MOVING BODY NUMBER 1,3
MOVING BODY INFORMATION 1
DRIVER        ARAI
DESTINATION HEAD OFFICE
STATUS       RETURNING

MOVING BODY INFORMATION 3
DRIVER        IKEYAMA
DESTINATION   TOKYO STATION
STATUS     TRANSPORTING

SYSTEM COMPLETION

# FIG. 11

```
                    ┌─────────┐
                    │  START  │
                    └────┬────┘
                         ▼
         ┌──────────────────────────────────┐  400
         │  TAKING IN TRAFFIC INFORMATION    │
         └──────────────┬───────────────────┘
                         ▼
         ┌──────────────────────────────────┐  401
         │  SPECIFYING THE KIND OF INFORMATION │
         └──────────────┬───────────────────┘
                         ▼
         ┌──────────────────────────────────┐  402
         │  SPECIFYING INPUT METHOD          │
         └──────────────┬───────────────────┘
                         ▼
         ┌──────────────────────────────────┐  403
         │  DISPLAYING RELATED MAP           │
         └──────────────┬───────────────────┘
                         ▼
         ┌──────────────────────────────────┐  404
         │  SPECIFYING CENTER                │
         └──────────────┬───────────────────┘
                         ▼
              ◇ TRAFFIC JAM INFORMATION ?    405
         NO ◄─┤                              │
              ◇──────────────┬───────────────◇
                         │ YES
                         ▼
         ┌──────────────────────────────────┐  406
         │  INPUTTING DISTANCE INFORMATION   │
         └──────────────┬───────────────────┘
                         ▼
         ┌──────────────────────────────────┐  407
         │  PRODUCING TRANSMISSION DATA      │
         └──────────────┬───────────────────┘
                         ▼
              ◇ THERE EXISTS EXPIRED DATA ?  408
         NO ◄─┤                              │
              ◇──────────────┬───────────────◇
                         │ YES
                         ▼
         ┌──────────────────────────────────┐  409
         │  RENEWING TRANSMISSION DATA       │
         └──────────────┬───────────────────┘
                         ▼
         ┌──────────────────────────────────┐  410
         │  RENEWING DISPLAYED MAP           │
         └──────────────┬───────────────────┘
                         ▼
                    ┌─────────┐
                    │   END   │
                    └─────────┘
```

# FIG. 12

A    11    B

```
┌─────────────────────────────────┐┌─────────────────────────────┐
│  ┌───────────────────────────┐  ││ ┌─────────────────────────┐ │
│  │ 0. CALL 03-495-9841       │  ││ │TOTAL DISPLAY(MAIN MENU) │ │
│  │ 1. RETURN IMMEDIATELY     │  ││ └─────────────────────────┘ │
│  │ 2. DESTINATION CHANGE     │  ││ ┌─────────────────────────┐ │
│  │ 3. TRAFFIC JAM AHEAD      │  ││ │COMMUNICATION            │ │
│  │ 4. · · · · ·              │  ││ └─────────────────────────┘ │
│  │ 5. · · ·                  │  ││  SELECT A MESSAGE TO        │
│  │ 6. · · · · · ·            │  ││  BE TRANSMITTED.            │
│  │ 7. · · · ·                │  ││                             │
│  │ 8. · · · ·                │  ││                             │
│  │ 9. · · · · ·              │  ││                             │
│  └───────────────────────────┘  ││                             │
│                                 ││                             │
│                                 ││ ┌─────────────────────────┐ │
│                                 ││ │SYSTEM COMPLETION        │ │
│                                 ││ └─────────────────────────┘ │
└─────────────────────────────────┘└─────────────────────────────┘
```